# EUROPEAN PATENT SPECIFICATION

(11) **EP 2 758 215 B1**
(45) Date of publication and mention of the grant of the patent: **03.08.2016**
(21) Application number: 12787479.0
(22) Date of filing: 21.09.2012
(51) Int. Cl.: B25J 9/16, B25J 19/00, B25J 19/06

(54) **ROBOT**
ROBOTER
ROBOT

(30) Priority: 22.09.2011 GB 201116372
(43) Date of publication of application: 30.07.2014
(73) Proprietor: ANNAZ, Fawaz Yahya, Brunei Darussalam (BN)
(72) Inventor: ANNAZ, Fawaz Yahya, Brunei Darussalam (BN)
(74) Representative: Lawrence, John
(86) International application number: PCT/GB2012/052347
(87) International publication number: WO 2013/041881

(56) References cited:
- US-A1- 2007 265 731
- FAWAZ YAHYA ANNAZ: "Fundamental design concepts in multi-lane smart electromechanical actuators; Fundamental design concepts in multi-lane smart electromechanical actuators", SMART MATERIALS AND STRUCTURES, IOP PUBLISHING LTD., BRISTOL, GB, vol. 14, no. 6, 1 December 2005 (2005-12-01), pages 1227-1238, XP020091982, ISSN: 0964-1726, DOI: 10.1088/0964-1726/14/6/016

## Description

The present invention relates to robots, more particularly industrial robots such as may be used in automated or semi-automated modern manufacturing processes.

Robots are increasingly being used in industry. The use of robots in industrial processes can improve productivity, cost effectiveness and health and safety. For instance, it is known to utilise robots in manufacturing processes, e.g. to automate repetitive tasks and/or to carry out operations in harsh, unpleasant or dangerous environments.

Typically, a manufacturing robot, i.e. an industrial robot that is used to carry out a step in the process of producing an article, comprises a manipulator or arm with an end effector provided typically at its distal end, the end effector being adapted for whatever task or tasks the robot is programmed to perform.

Typically, the arm may comprise one or more joints. The joints may be driven and the resulting movement of the arm controlled, in order to achieve the necessary motion for the robot to perform its task.

Individual industrial robots and/or systems comprising a plurality of such robots, e.g. a team of robots, may be monitored and controlled, e.g. have their motion scheduled, by a control platform, a control system or a controller, most often in accordance with a computer program run by the control platform, the control system or the controller. A user may be able to govern the operation of a robot and/or a system through a human machine interface (HMI) such as a computer terminal or a pendant.

A production line may comprise a series of stages, at each of which a specific task is performed, such that after the final stage an article is produced. The article may be a finished product or an intermediate such as a component or part for a more complex product or a semi-finished product. In general, it may be advantageous to utilise manufacturing robots at each stage. The article may be conveyed automatically from one stage to the next during its manufacture.

Problems arise when there is a failure or breakdown in an industrial robot on a production line. Generally, it may be necessary to stop the production line while the robot is repaired or replaced. Not only does the act of repair or replacement cost money, but there is also a cost associated with the loss in output, due to the production line being stopped.

Further time will generally be lost when restarting the production line, because this can be a lengthy and complicated process. In particular, home positioning and realignment of a robot may be complicated and may take a significant amount of time. For example, it will generally be necessary to ensure that every robot in the line is in the correct position and at the correct stage in its programme of movement relative to the other robot(s) and to any article(s) part of the way along the production line when the stoppage occurred, before re-starting the production line. This may not be a trivial exercise to perform.

It is a non-exclusive object of the invention to at least partially alleviate one or more of these problems.

According to the invention there is provided a robot comprising: an arm having at least one joint comprising a joint driving means, the joint driving means having a plurality of actuation lanes; and a fault detection and isolation system adapted to detect a fault in any one of the actuation lanes and to isolate the or each actuation lane exhibiting the fault.

The fault may cause the actuation lane in which it occurs to stop working completely, to lose or gain power, to work out of time or sequence, or to work at a slower or quicker rate.

Preferably, the robot may be provided with a control system connected to the fault detection and isolation (FDI) system. The control system may be operable to control the operation of the arm and to maintain, at least partially, operation of the arm when a fault is detected.

For instance, providing at least one of the actuation lanes for a given joint is not exhibiting a fault, the arm may be able to operate normally, i.e. continue to perform the task(s) it is primarily programmed to do. Alternatively, it may be that the arm can continue to operate only at a reduced rate or power, but nonetheless satisfactorily following the occurrence of a fault in one or more of the actuation lanes. Accordingly, the control system may be operable to compensate at least partially for the fault(s) in the actuation lane(s) by modifying the operation of the robot.

Typically, the control system may comprise a central control module such as a global environmental control (GEC) platform, which may be operable to schedule the motion of the robot or a system comprising one or more of the robots.

The control system may comprise one or more local control modules and/or the or a central control module.

A local control module may be provided for each joint. The or each local control module may be attached to, mounted on or embedded in the joint or arm. The given local control module for each joint may govern the operation of that joint's actuation lanes. Accordingly, the movement, position and/or speed of that joint may be controlled.

The fault detection and isolation system may be operable to transmit a signal to the or a control system when a fault is detected.

In one embodiment, the fault detection and isolation system may monitor, e.g. substantially continuously or intermittently, the actuation lanes during operation of the robot. The fault detection and isolation system may be in continuous or intermittent communication with the or a control system. The fault detection and isolation system may comprise a plurality of sensors and/or feedback loops.

In one embodiment, the FDI system may be operable to check directly or indirectly if a given sensor has failed or is providing a false reading, before isolating the actuation lane being monitored by that sensor.

Typically, the, or a FDI system may monitor the actuation lanes of the or each joint. The FDI system may comprise a variety of sensors and monitoring devices adapted to monitor the operation of the actuation lanes. For example, position and speed may be monitored. In particular, the FDI may comprise current measurement transducers. The FDI may be in communication with the local control modules.

When the FDI detects a fault, the actuation lane exhibiting the fault may be isolated, typically by the FDI activating a brake or a clutch.

The or a control system may comprise a central control module such as a global environmental control (GEC) platform in communication with the or each local control module. The central control module may be adapted to govern the overall operation of the robot within the context of the task or tasks performed by the robot. For instance, the central control module may synchronise or coordinate the movement of the robot with one or more other robots within a system.

The FDI system may be in communication with the or a central control module. In particular, the FDI system may transmit an alarm signal to the or a central control module, when a fault is detected. Upon receiving the alarm signal, the or a central control module may adapt the overall operation of the robot, e.g. by rescheduling the movement of one or more of the joints, so as to minimise or negate the effect of the fault. Where the robot is part of a team or system of robots, the or a central control module may adapt the overall operation of one or more of the robots, as required, in order to minimise or negate the effect of the fault.

The or a central control module may be operable to dispatch a maintenance robot following receipt of the alarm signal.

Advantageously, having built-in redundancy in the robot arm, by having a plurality of actuation lanes and a control system connected to the fault detection and isolation system that is operable to control the operation of the arm and to maintain, at least partially, or even substantially completely, the operation of the arm when a fault is detected, may mean that the arm can continue to operate in spite of the occurrence of fault(s). For instance, the robot may be able to continue to operate following a fault developing in one actuation lane, until a period of scheduled downtime, e.g. at the end of a shift, thereby avoiding the cost and inconvenience of an unscheduled maintenance stoppage. Operating a robot or a production line even at a reduced rate for a period of time may be preferable to having to stop the robot or production line.

In one embodiment, the fault detection and isolation system may monitor, e.g. substantially continuously or intermittently, the actuation lanes during operation of the robot. The fault detection and isolation system may be in continuous or intermittent communication with the or a control system. The fault detection and isolation system may comprise a plurality of sensors and/or feedback loops.

In one embodiment, the control system may be operable to check directly or indirectly if a given sensor has failed or is providing a false reading, before isolating the actuation lane being monitored by that sensor.

In one embodiment, the robot may be an industrial robot, e.g. a manufacturing robot or a maintenance robot. The robot may be static or mobile.

The joint driving means may comprise a common output shaft, which is driven by the actuation lanes. For instance, the actuation lanes may be operable to drive the common output shaft via a gear mechanism.

The joint driving means may comprise from 2 to 20, preferably from 2 to 10, more preferably from 2 to 5, actuation lanes. For instance, the joint driving means may comprise 2, 3, 4, 5, 6, 7, 8, 9 or 10 actuation lanes.

Each actuation lane may comprise a discrete actuator, e.g. a linear actuator or a rotary actuator. Each actuation lane may comprise an electromechanical, hydraulic or pneumatic actuator. Preferably, each actuation lane may comprise a motor, e.g. an electric motor. Suitable motors include brushless DC motors, brush-type DC motors, servo motors and permanent magnet motors.

In an embodiment, each discrete actuator may be releasably securable in or on the arm. Any suitable securing means may be provided. For instance, the securing means may comprise mechanical securing means, biasing means and/or magnetic securing means.

In an embodiment, the joint driving means may comprise a casing for the discrete actuators, which may be releasably securable therein.

In an embodiment, a common driving signal may be sent to the actuation lanes, e.g. by the or a control system, say by the or a local control module. By common driving signal is meant that, in use, one driving signal is sent to and shared by the actuation lanes. After a fault is detected and, optionally, one or more of the actuation lanes have been isolated following detection of the fault, a modified common driving signal may be sent to the actuation lanes still in operation.

Alternatively, individual driving signals may be sent to individual actuation lanes, e.g. by the control system. After a fault is detected and, optionally, one or more of the actuation lanes have been isolated following detection of the fault, modified individual driving signals may be sent to the individual actuation lanes still in operation.

The joint driving means may comprise a single-type summing architecture, e.g. a torque summing architecture or a velocity summing architecture. Alternatively, the joint driving means may comprise a two-type summing architecture.

The arm may comprise any number of joints. For instance, the arm may comprise 2 or more joints. The arm may comprise from 2 to 30, preferably from 3 to 20, more preferably from 3 to 10, joints.

Typically, there may be links between the joints. The links may generally have the form of shafts or elongate members.

Typically, the arm may comprise an end effector

The invention further provides the use of a robot according to the invention to produce an article.

The article may be an electrical or engineering product or a component for such a product. For instance, the article may be a component for a vehicle such as a car, truck, lorry, boat, ship or aircraft.

When an actuation lane has been isolated, the arm may continue to operate, but without recourse to the isolated actuation lane. The isolated actuation lane may then be locked and may essentially be treated as through it were a rigid, static component of the arm.

The invention may provide an online repairable robot, e.g. an online repairable manufacturing robot. Accordingly, once a fault is detected, in use, operation of the robot may be maintained, at least partially, or event completely, and/or the robot may be repaired without halting operation of the robot and/or a system such as a production line or an assembly line with which the robot is associated.

In order that the invention may be well understood, it will now be described, by way of example only with reference to the accompanying drawings, in which:
**Figure 1** shows a manufacturing system according to one embodiment of the invention;
**Figure 2** shows a portion of an arm of a manufacturing robot according to one embodiment of the invention;
**Figures 3A and 3B** show a motor for use in a robot according to one embodiment of the invention;
**Figure 4** shows a securing device for use with the motor of Figures 3A and 3B; and
**Figure 5** shows a casing for housing the motors of Figure 3A and 3B.

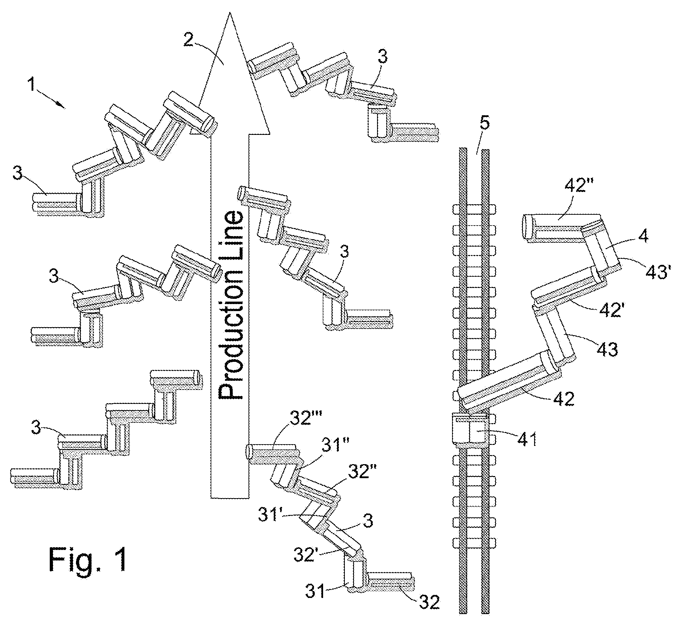

Figure 1 shows schematically a manufacturing system 1 within an industrial facility (not shown) such as a factory or an assembly plant. In this example, the assembly plant manufactures automotive vehicles, e.g. cars.

The system 1 comprises a production line 2. Articles pass along the production line in the direction indicated by the arrow during their manufacture.

Six manufacturing robots 3 are located at intervals along the production line 2, each manufacturing robot 3 being adapted and programmed to perform a certain task as part of the overall process of manufacture. Each manufacturing robot 3 comprises a multi-axis arm having an end effector (not shown) at its distal end. Each arm comprises a series of links 32, 32', 32", 32'" and actuatable joints 31, 31', 31", each joint comprising two lanes of actuation. For simplicity, the arm of only one of the manufacturing robots 3 is labelled.

Each manufacturing robot 3 will have an end effector suitable for the task it is programmed to perform. In this example, apart from the end effectors, the architecture of the arms of each robot 3 is essentially the same. Each joint is actuated by a pair of motors driving a common output shaft which in turn manipulates the next link in the series. This is described in more detail below.

Each end effector could comprise one of a wide variety of types - for example, a screw driver, a welding head, a cutting head, a clamp, a drill, a router, a paint gun, an adhesive gun, component position fingers or a sucker; essentially, pretty well any tool.

Figure 1 also shows a maintenance robot 4. The maintenance robot 4 comprises a body 41 which is mounted on a rigid track such as a railway track 5. The maintenance robot 4 can therefore be moved around the industrial facility, as required. Connected to the body 41, the maintenance robot 4 further comprises a multi-axis arm comprising a series of links 42, 42', 42" and joints 43, 43' terminating in a suitable end effector (not shown).

The system 1 comprises a control system (not shown). The control system comprises a central control module in the form of a global environmental control platform (not shown), which governs the operation of the production line 2 including the overall movement of the manufacturing robots 3 in accordance with one or more computer programs. The central control module also governs the maintenance and repair of the manufacturing robots 2. One or more computer terminals (not shown) enable an operator to monitor and control the operation of the production line 2 via the central control module.

The control system further comprises a plurality of local control modules (not shown), one of which being associated with each joint in the arms of the manufacturing robots 3 and, preferably, in the arms of the maintenance robot 4.

Each manufacturing robot 3 is provided with a fault detection and isolation (FDI) system adapted to detect a fault in any one of the actuation lanes. The FDI system is in constant communication with the local control modules and with the central control module. The FDI system will transmit a signal to the central control module when a fault is detected.

The fault detection and isolation (FDI) system should exhibit acceptable promptness of detection, sensitivity to incipient faults, while minimising missed fault detection, rate of false alarms and incorrect fault identification. The person skilled in the art will be aware of a number of different approaches for monitoring multi-lane systems to detect faults.

Once a fault has been detected, identified and locally isolated, a signal is transmitted to the central control module. The central control module will then operate to modify the operation of the manufacturing robots 3 along the manufacturing line 2, in order to minimise or negate the effect of the fault. The central control module may also be operable to deploy the maintenance robot 4, in order to repair the manufacturing robot 3 exhibiting the fault. Normally, the or each maintenance robot 4 is in stand-by mode.

The maintenance robot 4 can move around on the railway track 5 to approach and repair the manufacturing robot 3 having the joint 32, 32', 32", 32'" exhibiting the fault.

Once a fault has been identified on a particular joint of an arm of one of the manufacturing robots 3, the GEC platform will continuously send to the maintenance robot 4 information regarding the dynamic movement of the manufacturing robot 3. The maintenance robot 4 will move in close to the manufacturing robot 3 and synchronise its arm's movement with that of the arm comprising the joint exhibiting the fault 32, 32', 32", 32"'.

Synchronisation of the motion of the maintenance robot 4 and the manufacturing robot 3 can be important, because it may advantageously enable the manufacturing robot 3 to be repaired without shutting down the production line 2. It can make setting up a pre-programmed movement routine for the end effectors of the maintenance robot possible, because the need to compensate for bodily relative movement between the joint in question and the maintenance robot may be eliminated.

While a railway track 5 is shown in Figure 1, additionally or alternatively, other means for moving the maintenance robot 4 around the industrial facility may be provided, e.g. elevated wires or tracks, movable gantries or platforms. The maintenance robot 4 may have on-board power supply and steering means to enable it to propel itself around the floor of the industrial facility to any location. Alternatively, the maintenance robot 4 may be carried on or by a separate vehicle, e.g. a railway vehicle or an electric- or petrol-driven truck or the like.

The system 1 may comprise any number of manufacturing robots 3 and maintenance robots 4. The manufacturing robots 3 and/or maintenance robots 4 may have more than one arm.

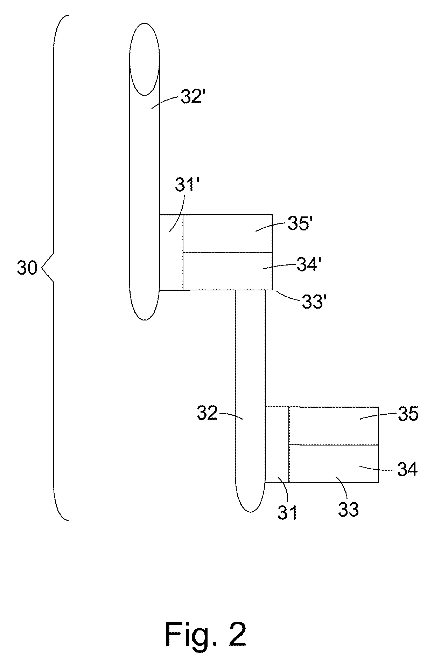

Figure 2 shows in more detail a portion 30 of an arm of a manufacturing robot 3. The portion 30 comprises a first joint 31, a first link 32, a second joint 31' and a second link 32'. The first joint 31 comprises a casing 33, in which a first motor 34 and a second motor 35 are arranged in parallel and are releasably secured. The housing 33 comprises a differential gear mechanism (not shown) such that the first motor 34 and the second motor 35 drive a common output shaft (not shown), which is connected to the first link 32. The longitudinal axis of the common output shaft (not shown) is substantially perpendicular to the longitudinal axis of the first link 32.

The second joint 31' is located at the opposite end of the first link 32 from the first joint 31.

The second joint 31' comprises a casing 33', in which a first motor 34' and a second motor 35' are arranged in parallel and are releasably secured. The architecture of the second joint 31' is essentially identical to that of the first joint 31, as described above. The common output shaft (not shown) from the second joint 31' is connected to the second link 32'. The longitudinal axis of the common output shaft from the second joint 31' is substantially perpendicular to the longitudinal axis of the first link 32 and to the longitudinal axis of the second link 32'.

The motors 34, 35, 34', 35' are all substantially identical brushless DC motors. Other motors may be suitable.

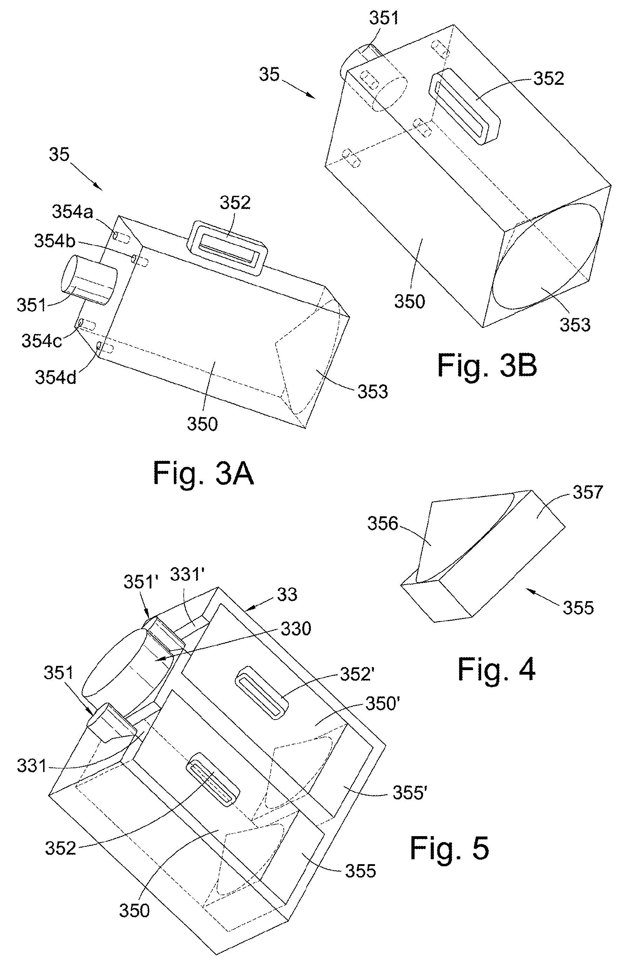

As shown in Figures 3A and 3B, the motor 35 has a cuboid-shaped housing 350. A shaft 351 from the motor extends through and protrudes from a first end of the housing 350. The first end of the housing 350 is also provided with four notches 354a, 354b, 354c, 354d. A concave depression 353 is provided in a second end of the housing 350.

Figure 4 shows a securing device 355 for use with the motor 35 shown in Figures 3A and 3B. The securing device 355 comprises a conical portion 356 which is shaped and dimensioned to be received, in use, by the concave depression 353 in the motor 35. The securing device further comprise a spring 357 connected to the base of the conical portion 356.

Figure 5 shows in more detail the main components of the first joint 31. It should be noted that the second joint 31' is basically the same as the first joint 31.

The casing 33 has the general form of an open-topped box with a divider, whereby a pair of cavities is provided, each cavity being adapted to hold, in use, a motor housing 350, 350' and a securing device 355, 355'.

The casing 33 comprises in one side a pair of slots 331, 331'. Each slot 331, 331' is positioned such that, in use, a motor shaft 351, 351' of a motor held in the casing 33 is received in the slot 331, 331' and protrudes from the casing 33. Between the slots 331, 331' there is a differential gear mechanism 330 arranged on the outside of the casing 33. The differential gear mechanism 330 engages, in use, with the motor shaft 351, 351' of each of the motors within the casing 33, and drives a common output shaft (not shown).

The insertion and removal of the motor 35 from the casing 33 will now be described. The securing device 355 is placed in one of the cavities within the housing against an inner wall opposite the slot 331, with the conical portion 356 pointing towards the slot 331. The motor 35 is then placed into the cavity by placing the depression 353 on the conical portion 356 and compressing the spring 357. The motor shaft 351 is received in the slot 331. The notches 354a, 354b, 354c and 354d align with and, when urged by the spring 357, receive corresponding locating studs positioned on the inner wall of the mechanically actuated cavity. This process is carried out in reverse when removing the motor 35 from the housing 33. The insertion and removal of the motor 35 is made easier by the provision of the handle 352. The handle 352 also ensures that the motor 35 can only be placed into the housing 33 in the correct orientation i.e. as shown in Figure 4.

Many variations may be made to the form of the housing 350 and the casing 33. What is important is that the casing 33 is shaped, sized and dimensioned to receive the housing 350, preferably requiring movement (bodily movement) of the housing only in a single orientation or sense.

One or more of the studs may be biased, e.g. by a resilient means such as a spring. The notches and locating studs may be reversed, i.e. the studs may be on the motor housing, while the notches may be on the casing.

The casing 33 may, for instance, be more or less enclosed or open. The casing 33 may have a closable top, lid or cover. Alternatively, the casing may provide a clip or clip-like formation for each motor. Additional securing means such as a strap may be employed.

Many suitable arrangements will be apparent to the person skilled in the art.

The casing 33 may be designed for more or fewer lanes of actuation, e.g. motors.

The position of the slots 331, 331' may be altered. In fact, it may not be necessary for the slots 331, 331' to be present. What is important is that the motor shafts 351, 351' engage with the differential gear mechanism 330.

In the example, the manufacturing robots 3 comprise a single type velocity summing architecture. Accordingly, the joints are provided with a brake (not shown) operable when a fault develops in one of the motors (that is to say, the FDI system causes the isolation and application of the brakes to an actuation lane in the joint and locks the actuation lane against relative movement of the link).

In a velocity summing architecture, the position of the common output shaft is the average sum of the displacement of the individual actuation lanes. Electromechanically, this can be achieved by summing the velocity or position of the actuation lanes to the common output shaft via a differential gearbox. This has the advantage of eliminating force fight between mismatched actuation lanes. A known disadvantage of this scheme may be illustrated by examining the system in its actuation lane failure modes, during which the failed lane would either stop working completely or its speed is increased or reduced. In order to provide a constant output speed, the remaining actuation lanes will compensate for the failure either by increasing or decreasing their speed. Position or speed compensation by the other lanes will continue until the failure is detected and the faulty lane is identified and isolated, e.g. by switching off the drive currents supplying it. If isolation is not successful, the failed actuation lane will continue to contribute to the common output shaft, therefore it is essential to include brakes to lock the faulty actuation lane.

In a velocity summing architecture, in order to provide actuator angular displacement measurements, rotary variable differential transformers (RVDTs) may be: (i) placed at the output shaft, providing measurements of the shaft's speed and position; or (ii) before the summing differential gearbox, providing measurements of the individual lanes' speed and positions; or (iii) on both individual lanes and on the output shaft, providing measurements of the individual lanes' as well as shaft speed and positions.

It should be noted that since it may be of interest to feed back information on individual shafts' angular speeds, mounted tachometers or motors with built in tachometers may be used. It will be appreciated that this will result in an immediate loss of a tachometer reading after the isolation of an actuation lane, e.g. due to chip or motor failure.

Failures in any of the feedback sensors, may cause the FDI system to isolate the failed sensor. Feedback signals in the control system will generally be based on the average value of the readings from the remaining active sensors. In preferred embodiments, the FDI system may be operable to check directly or indirectly if a given sensor has failed or is providing a false reading, before isolating the actuation lane or joint being monitored by that sensor.

An actuation lane failure (identified through current monitoring) could be either due to commutation driving chip, power supply or motor failure. Lane failures will result in the isolation of the entire affected lane, e.g. by isolating the power supply and then activating a brake to avoid speed compensation by other lanes.

Optionally, lane equalization is provided by driving the lanes by a common signal.

In an alternative embodiment, a torque summing architecture may be used. In a torque summing architecture, the output torque is the algebraic sum of the torques from the individual actuation lanes. Typically, the actuation lanes are locked together via a gearbox to a common output shaft. Such a configuration has the advantage of eliminating the problem of gradual speed run-away (evident in velocity summing) in any of the actuation lanes. A known disadvantage of this scheme is that there is a possibility of force fighting between mismatched actuation lanes. This effect can be reduced or minimised to a large extent by supplying a common driving signal to each lane (lane equalization). The other problem associated with this technique is that the discrete actuator in a faulty actuation lane, after it has been isolated, will appear as an inertial load to the other actuation lanes. Therefore, it is essential to include clutches in this architecture to mechanically disconnect faulty actuation lanes.

In a torque summing architecture, unlike velocity summing, the placement position of rotary variable differential transformers (RVDTs) and tachometers is not considered to be crucial, since all individual and common output shafts are locked together.

In some embodiments, the motors may have built-in tachometers. Use of the motor's built-in tachometers could result in the loss of its reading after lane isolation. However, a better signal is produced if the motor's built-in tachometers are used due to the higher shaft speed.

Failure logic within the FDI system may ensure that failures detected by the FDI system would result in the isolation of the faulty actuation lane. Feedback signals to the local control modules within the control system will always have the average value of the remaining active sensors.

An actuation lane failure may result in the isolation of the entire affected lane, e.g. by initially isolating the power supply and then activating a clutch in the path of the failed lane (to prevent back driving the motor).

Lane equalization to minimise force fight between lanes is crucial in this type of architecture.

Alternatively, the joint driving mechanism may comprise either of the single-type summing architectures, e.g. a velocity-torque summing architecture or a torque-velocity summing architecture. Alternatively, the joint driving mechanism may comprise a two-type summing architecture. Appropriate brakes and clutches will need to be included in order to ensure complete isolation of faulty actuation lanes.

The same type of architecture may be used for all of the joints of a given arm.

A given arm may comprise joints having joint driving mechanisms comprising different summing architectures, e.g. a combination of joints with velocity-summing architecture, torque-summing architecture and two-type summing architecture.

The person skilled in the art may be able to select appropriate joint architectures for a given task.

The final part of a procedure for repairing a manufacturing robot 3 will now be described.

When the maintenance robot 4 has synchronised its motion with that of the manufacturing robot 3, the maintenance robot 4 removes the motor 34, 34', 35, 35' exhibiting the fault by:
- gripping the handle 352 of the motor 35;
- pushing against the spring 357 so as to remove the studs from the notches; and
- removing the motor 34, 34', 35, 35' from the casing 33, 33'.

The motor that has been removed can then be replaced by a new motor. In order to do this, the maintenance robot 4 may:
- fetch, e.g. from a store, and/or carry the new motor to a point alongside the manufacturing robot 3;
- synchronise its motion with that of the manufacturing robot;
- insert the new motor in the casing; and
- release the handle on the new motor.

It will be appreciated that it may be preferred for the maintenance robot(s) to have arms with similar, if not identical, architectures to the arms of the manufacturing robot(s), so as to enable easier synchronisation and/or to allow easier repair of the maintenance robot(s). In other embodiments the maintenance robots and manufacturing robots may have different architectures.

The person skilled in the art will appreciate that the invention disclosed herein may have utility in any industry that employs robots in at least partially automated manufacturing or production processes. Examples of such industries may include the electronics, automotive, steelmaking and aerospace industries.

It is envisaged that many existing industrial facilities such as production lines, assembly lines or factories may be beneficially refurbished and/or upgraded by applying the present invention.

## Claims

1. A robot (3) comprising: an arm (30) having at least one joint (31, 31') comprising a joint driving means, the joint driving means having a plurality of actuation lanes (34, 34', 35, 35') and a fault detection and isolation (FDI) system adapted to detect a fault in any one of the actuation lanes,
wherein the fault detection and isolation system is operable to isolate the or each actuation lane exhibiting the fault.

2. A robot according to claim 1, wherein the robot is provided with a local control system connected to the fault detection and isolation system, the control system being operable to control the operation of the joint and to maintain, at least partially, operation of the joint when a fault is detected.

3. A robot according to claim 1 or claim 2, wherein the robot is provided with a global environmental control (GEC) platform connected to the fault detection and isolation system, the GEC platform being operable to control the operation of the arm and to maintain, at least partially, operation of the arm when a fault is detected.

4. A robot according to claim 1, claim 2 or claim 3, in which the fault detection and isolation system continuously monitors the actuation lanes.

5. A robot according to any one of the preceding claims, wherein the joint driving means comprise a common output shaft, which is driven by the actuation lanes.

6. A robot according to any one of the preceding claims, wherein the joint driving means comprises from two to 20 actuation lanes.

7. A robot according to any one of the preceding claims, wherein each actuation lane comprises a discrete actuator, each actuator being one of an electromechanical, a hydraulic or a pneumatic actuator.

8. A robot according to claim 7, wherein each discrete actuator is releasably securable in or on the arm.

9. Use of a robot according to any one of claims 1 to 8 to produce an article.

## Patentansprüche

1. Ein Roboter (3), der Folgendes aufweist: einen Arm (30) mit mindestens einem Gelenk (31,31'), das eine Gelenk-Antriebsvorrichtung aufweist, die Gelenk-Antriebsvorrichtung verfügt dabei über eine Vielzahl von Stellbewegungs-Bahnen (34, 34', 35, 35') und ein *Fault Detection and Isolation (FDI)-System,* das so angepasst sind, dass es eine Störung in einer der Stellbewegungs-Bahnen erkennen kann.
wobei das *Fault Detection and Isolation-System* die oder jede Stellbewegungs-Bahn, die eine Störung anzeigt, isolieren kann.

2. Ein Roboter gemäß Anspruch 1, wobei der Roboter mit einem lokalen Steuerungssystem ausgestattet ist, das mit dem *Fault Detection and Isolation-System* verbunden ist, das Steuerungssystem kann die Tätigkeit des Gelenks steuern und, zumindest teilweise, die Tätigkeit des Gelenks aufrechterhalten, wenn eine Störung erkannt wird.

3. Ein Roboter gemäß Anspruch 1 oder Anspruch 2, wobei der Roboter mit einer *Global Environmental Control* (*GEC*)-Plattform ausgestattet ist, die mit dem *Fault Detection and Isolation-System* verbunden ist, die GEC-Plattform ist dabei in der Lage, die Tätigkeit des Arms zu steuern und, zumindest teilweise, die Tätigkeit des Arms aufrechtzuerhalten, wenn eine Störung erkannt wird.

4. Ein Roboter gemäß Anspruch 1, Anspruch 2 oder Anspruch 3, in dem das *Fault Detection and Isolation-System* kontinuierlich die Stellbewegungs-Bahnen überwacht.

5. Ein Roboter gemäß eines der vorhergehenden Ansprüche, wobei die Gelenk-Antriebsvorrichtungen eine gemeinsame Abgangswelle aufweisen, die von den Stellbewegungs-Bahnen angetrieben wird.

6. Ein Roboter gemäß eines der vorhergehenden Ansprüche, wobei die Gelenk-Antriebsvorrichtung zwischen zwei und 20 Stellbewegungs-Bahnen aufweist.

7. Ein Roboter gemäß eines der vorhergehenden Ansprüche, wobei jede Stellbewegungs-Bahn einen separaten Aktuator aufweist, jeder Aktuator ist dabei entweder ein elektromechanischer, ein hydraulischer oder ein pneumatischer Aktuator.

8. Ein Roboter gemäß Anspruch 7, wobei jeder separate Aktuator abnehmbar in oder am Arm befestigt werden kann.

9. Die Verwendung eines Roboter gemäß eines der Ansprüche 1 bis 8 zur Herstellung eines Gegenstands.

## Revendications

1. Un robot (3) comprenant : un bras (30) possédant au moins une articulation (31, 31') comprenant un moyen d'entraînement d'articulation, le moyen d'entraînement d'articulation possédant une pluralité de voies d'actionnement (34, 34', 35, 35') et un système de détection et d'isolation de défauts (FDI) adapté de façon à détecter un défaut dans l'une quelconque des voies d'actionnement.
où le système de détection et d'isolation de défauts est conçu de façon à isoler la ou chaque voie d'actionnement présentant le défaut.

2. Un robot selon la Revendication 1, où le robot est équipé d'un système de commande local raccordé au système de détection et d'isolation de défauts, le système de commande étant conçu de façon à commander le fonctionnement de l'articulation et à maintenir, au moins partiellement, le fonctionnement de l'articulation lorsqu'un défaut est détecté.

3. Un robot selon la Revendication 1 ou 2, où le robot est équipé d'une plateforme de commande environnementale globale (GEC) raccordée au système de détection et d'isolation de défauts, la plateforme GEC étant conçue de façon à commander le fonctionnement du bras et à maintenir, au moins partiellement, le fonctionnement du bras lorsqu'un défaut est détecté.

4. Un robot selon la Revendication 1, 2 ou 3, dans lequel le système de détection et d'isolation de défauts surveille en continu les voies d'actionnement.

5. Un robot selon l'une quelconque des Revendications précédentes, où le moyen d'entraînement d'articulation comprend un arbre de sortie commun, qui est entraîné par les voies d'actionnement.

6. Un robot selon l'une quelconque des Revendications précédentes, où le moyen d'entraînement d'articulation comprend de deux à vingt voies d'actionnement.

7. Un robot selon l'une quelconque des Revendications précédentes, où chaque voie d'actionnement comprend un actionneur discret, chaque actionneur étant un actionneur parmi un actionneur électromécanique, hydraulique ou pneumatique.

8. Un robot selon la Revendication 7, où chaque actionneur discret peut être fixé de manière libérable dans ou sur le bras.

9. L'utilisation d'un robot selon l'une quelconque des Revendications 1 à 8 de façon à produire un article.
